# EUROPEAN PATENT APPLICATION

(11) **EP 1 123 646 A1**
(43) Date of publication of application: **16.08.2001**
(21) Application number: 00202371.1
(22) Date of filing: 06.07.2000
(51) Int. Cl.: A01B 49/06, A01C 7/00

(54) **A method of ecological grain-growing and a sowing machine therefor**

(30) Priority: 06.07.1999 DK 97599
(71) Applicant: Nygard, Claus Martin Holmen, 7790 Thyholm (DK)
(72) Inventor: Nygard, Claus Martin Holmen, 7790 Thyholm (DK)
(74) Representative: Skoett-Jensen, Knud

(57) **Abstract**

With ecological grain-growing, it is important to enrich the soil with nitrogen from e.g. white clover, and with the invention there is disclosed a particularly advantageous method whereby a start is made with full sowing with clover which is allowed to gain good growth, after which the clover is ploughed-in along strips of approx. 20 cm in breadth and 5 cm between them, and in the same operation there is carried out a sowing of the grain in the centre of the ploughed-in lanes. After harvesting of the grain with a certain content of clover, a ploughing-in of both the corn stubble and the remaining clover is carried out.

A relevant machine according to the invention consists of a combined strip ploughing-in aggregate and seed drill machine having seed distributors which open out directly behind the centre of the lane ploughing-in tools.

## Description

The present invention concerns a method of ecological grain-growing and a sowing machine therefor. It is hereby important that the field is provided with nitrogen from plants such as peas or clover, namely white clover, which can build up a concentration of nitrogen from the air and surrender the nitrogen to the soil by being ploughed-in to the soil. This can be grown by the field being sown with clover after the grain has begun to sprout, so that the clover does not hinder the growth of the grain, in that afterwards, after the grain harvest (where the grain may well have a certain clover content), both the corn stubble and the clover are ploughed-in.

With the invention it has been found to be advantageous for use to be made of the practice that work is first effected with a field sown with clover, where the clover is allowed to gain good growth so that it can absorb a great deal of nitrogen in its green parts. Later, regardless of whether it has become autumn or spring, there is thus carried out a combination of ploughing-in of the clover and the sewing of the grain, in that the field is prepared with a suitable ploughing-in tool which works the field in parallel lanes corresponding to the future rows of grain, in that strips of the grown clover are left between these rows. The sowing is carried out in immediate connection with the ploughing-in, namely by using sowing tubes which open out in the middle of the ploughing-in lanes, and which make it possible for the seed to be delivered in or just behind the actual working area, so that the seeds will also automatically be ploughed-in.

Out of regard for the new grain plants, the sowing lanes must have a reasonable breadth, e.g. 10-12 cm on each side of the plants, also so that the retained strips of clover allow light to reach the plants. Plant rows with a distance of 12-13 cm are most normal, but it has shown that while retaining the number of plants per square meter, this distance can be increased to 20-25 cm without any significant loss, and it herewith becomes possible to work both with adequate sowing lane breadths and retained strips of clover of e.g. 4-7 cm, preferably 5 cm.

The strips of clover which are left are retained until after the harvest, until they are thereafter ploughed-in together with the stubble. They will not hamper the harvest to any distinct degree, partly because it is possible to cut the straws off above the clover and partly because it will be acceptable that clover appears in the harvested material.

With the invention it will be achieved that the remaining, grown clover can accumulate nitrogen through the whole growth and harvest period for the grain, whereby when it is ploughed-in it will provide a significant supply of nitrogen to the field, which thereafter can thus be prepared for the next sowing.

Mechanically, the invention will distinguish itself by comprising a combined ploughing-in and sowing machine, the ploughing-in aggregate of which is divided in such a manner that it appears in sections corresponding to the desired breath of the sowing lane, and with mutual distance corresponding to the desired breadth of the clover strips, while the associated seed distributors open out just behind the centre of the individual sections.

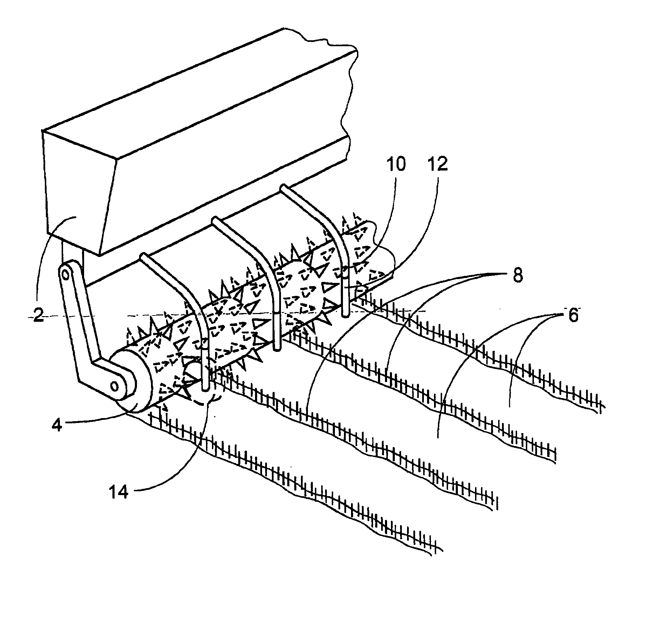

An example of such a machine is shown schematically in the drawing, where a sowing machine with seed box 2 is shown in combination with a rotary cultivator in the form of a driven drum provided with teeth, the tools on which are grouped in such a manner that on a field with grown clover or other relevant plants they leave a relatively broad strip 6 of tilled soil with ploughed-in plant material and intermediate narrower strips 8 of intact plants.

Via seed distributors 10, the seed box 2 is connected to sowing tubes 12 which are mounted on a suitable, not-shown support frame in respective positions directly behind the centre of the individual tilling sections on the drum 4. It is preferable for scrapers to be placed behind the sowing tubes or - as shown by the stippled lines - plough-share disks 14 to ensure a covering of ploughed-in material for the seeds.

The sowing machine will be able to be constructed in many different ways, including with means for varying the respective breadths of the rows, e.g. by use of tilling units which can be mounted individually, each of which can be mounted with tools with different operative breadths.

## Claims

1. Method of ecological grain-growing, by which work is carried out with a combination of grain sowing, sowing of nitrogen plants, harvesting of the grain, possibly with a certain content of nitrogen plant material, and ploughing-in of the corn stubble and remaining parts of the nitrogen plants, **characterised** in that to begin with, the field is fully sown with nitrogen plants which are allowed to gain good growth, after which a selective ploughing-in of the nitrogen plants is effected in lanes with a breadth and at a distance which is suitable for a subsequent sowing of grain in rows in between these lanes, and that the grain is harvested with a relatively low content of nitrogen plant parts, and thereafter a ploughing-in of both the stubble and the remains of the nitrogen plants is carried out.

2. Method according to claim 1, **characterised** in that said lanes are formed with a breadth in the order of 20 cm, with intermediate lanes of nitrogen plants with a breadth of 4-7 cm, preferably approx. 5 cm.

3. Method according to claim 1, **characterised** in that the sowing of the grain is carried out in direct connection with the ploughing-in of the lanes by means of a combined ploughing-in and sowing machine.

4. Sowing machine for the execution of the method according to claim 3, **characterised** in that it is configured as a seed drill machine with a ploughing-in aggregate divided into sections which leaves behind a pattern of parallel ploughing-in lanes with a breadth in the order of 20 cm, and intermediate uncultivated lanes with breadths of approx. 4-7 cm, while the machine's seed distributors open out directly behind the centre of the ploughing-in sections and are preferably followed by means for the covering of the sown seeds with soil.
